(19) **Europäisches Patentamt / European Patent Office / Office européen des brevets**

(11) **EP 4 768 241 A1**

(12) # EUROPEAN PATENT APPLICATION
published in accordance with Art. 153(4) EPC

(43) Date of publication:
**01.07.2026 Bulletin 2026/27**

(21) Application number: **24856546.7**

(22) Date of filing: **23.08.2024**

(51) International Patent Classification (IPC):
**B32B 27/00** (2006.01)  **B32B 9/00** (2006.01)
**B32B 27/32** (2006.01)  **B65D 65/40** (2006.01)

(52) Cooperative Patent Classification (CPC):
**B32B 9/00; B32B 27/00; B32B 27/32; B65D 65/40**

(86) International application number:
**PCT/JP2024/030075**

(87) International publication number:
**WO 2025/041858 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.08.2023 JP 2023135998**
**19.04.2024 JP 2024068684**

(71) Applicant: **Dai Nippon Printing Co., Ltd.**
**Tokyo 162-8001 (JP)**

(72) Inventors:
• **MORIMOTO, Taro**
**Tokyo 162-8001 (JP)**
• **KOICHI MATSUMOTO, Chisayo**
**Tokyo 162-8001 (JP)**

• **ONO, Yoshiyuki**
**Tokyo 162-8001 (JP)**
• **WATANABE, Osamu**
**Tokyo 162-8001 (JP)**
• **SUZUKI, Tsuyoshi**
**Tokyo 162-8001 (JP)**
• **ITAMI, Shohei**
**Tokyo 162-8001 (JP)**
• **TAMADA, Shuhei**
**Tokyo 162-8001 (JP)**
• **HACHIYA, Yuki**
**Tokyo 162-8001 (JP)**

(74) Representative: **Müller-Boré & Partner**
**Patentanwälte PartG mbB**
**Friedenheimer Brücke 21**
**80639 München (DE)**

(54) **MULTILAYER BODY AND PACKAGED PRODUCT USING SAME**

(57)     [Problem]
To provide a multilayer body capable of suppressing deterioration of barrier properties even after heat sterilization treatment.

[Solution]
A heat-sterilized multilayer body for use in a packaging bag containing a retorted food or a boiled food. The multilayer body includes: a barrier film in which a biaxially stretched polypropylene substrate, an inorganic oxide vapor deposition film, and a covering layer having barrier properties are laminated in this order; and a sealant layer. In the covering layer of the multilayer body, a composite elastic modulus and an indentation hardness measured by a nanoindentation method from a cross section of the covering layer are respectively from 5.0 GPa to 9.5 GPa and from 0.9 GPa to 1.7 GPa.

FIG .1

## Description

TECHNICAL FIELD

The present invention relates to a multilayer body and a packaging product using it.

BACKGROUND ART

In recent years, from the viewpoint of environmental consideration, mono-material packaging materials have been investigated for the purpose of improving the recyclability of packaging materials.

For example, instead of polyester films (PET films) which have been widely used conventionally, a multilayer body including a laminate of a polyolefin film, such as a biaxially stretched polypropylene film (OPP film), as a substrate and also a polyolefin film, such as a non-stretched polypropylene film (CPP film), as a sealant layer laminated to the substrate has been investigated as a mono-material packaging material.

For example, Patent Document 1 below discloses a gas barrier multilayer body including a substrate layer containing a polyolefin-based resin, a barrier layer, and an overcoat layer containing a polyvinyl alcoholic resin. The overcoat layer surface has a hardness of 1.5 GPa or less measured by a nanoindentation method. Thus, a multilayer body including a barrier film composed of a biaxially stretched polypropylene substrate, an inorganic oxide vapor deposition film, and a covering layer having barrier properties laminated in this order and a sealant layer is known as a polyolefin-based mono-material packaging material.

Citation List

Patent Documents

Patent Document 1: PCT International Publication No. WO 2022/085586

DISCLOSURE OF THE INVENTION

Problems to be Solved by the Invention

In a case where a multilayer body made of a polyolefin-based mono-material packaging material is subjected to retort sterilization treatment or boiling treatment, an OPP film is inferior to a PET film in heat resistance and strength. Consequently, the barrier properties of an OPP film after heat sterilization are significantly decreased compared to a PET film.

Patent Document 1 prescribes the composite elastic modulus and hardness of a covering layer, but the subject is "processing suitability" of a barrier film. Accordingly, Patent Document 1 merely prescribes the composite elastic modulus and hardness of a covering layer "before heat sterilization" and does not refer to the heat sterilization and the consequent barrier properties at all.

The results of the inventors' investigation revealed that the composite elastic modulus and hardness of a covering layer vary before and after lamination and depending on whether heat sterilization treatment has been applied. Accordingly, even if the composite elastic modulus and hardness of a covering layer are specified "before heat sterilization" as in Patent Document 1, the barrier properties of a heat-sterilized multilayer body cannot be predicted.

Means for Solving the Problems

The present inventors have conducted extensive research to solve the above problem and, as a result, found the ranges of composite elastic modulus and indentation hardness suitable for application to heat sterilization, such as retort treatment, of a covering layer constituting a multilayer body of a polyolefin-based mono-material packaging material and found a packaging material that can suppress a decrease in the barrier properties even "after heat sterilization of the multilayer body". Consequently, the present invention has been accomplished. Specifically, the present invention provides the following.

(1) A heat-sterilized multilayer body for use in a packaging bag adapted for containing a retorted food or a boiled food,

the multilayer body including: a barrier film including a biaxially stretched polypropylene substrate, an inorganic oxide vapor deposition film, and a covering layer having barrier properties laminated in this order; and a sealant layer, wherein
the covering layer of the heat-sterilized multilayer body has a composite elastic modulus of 5.0 GPa or more and 9.5 GPa or less and an indentation hardness of 0.9 GPa or more and 1.7 GPa or less measured by a nanoindentation method using a cross section of the covering layer.

(2) The heat-sterilized multilayer body according to claim 1, wherein the composite elastic modulus is 6.0 GPa or more and 9.0 GPa or less, and the indentation hardness is 1.0 GPa or more and 1.5 GPa or less.
(3) The heat-sterilized multilayer body according to claim 1 or 2, wherein the heat sterilization is retort treatment.
(4) The heat-sterilized multilayer body according to claim 1 or 2, wherein the covering layer includes a cured product of a resin composition including an alkoxysilane and a hydroxy group-containing water-soluble resin.
(5) The heat-sterilized multilayer body according to claim 1 or 2, wherein a surface of the covering layer of the barrier film is laminated to another film with an adhesive layer therebetween.
(6) A packaging material of the heat-sterilized multilayer body according to claim 1 or 2, the packaging material having an oxygen transmission rate of 10.0 $cc/m^2/day/atm$ or less measured in accordance with JIS K 7126-2 at 23°C and 90% RH.
(7) A packaging material of the heat-sterilized multilayer body according to claim 1 or 2, the packaging material having an oxygen transmission rate of 5.0 $cc/m^2/day/atm$ or less measured in accordance with JIS K 7126-2 at 23°C and 90% RH.
(8) A packaging product comprising the multilayer body according to claim 1 or 2.
(9) Use of a heat-sterilized multilayer body for packaging a retorted food or a boiled food,

the heat-sterilized multilayer body including: a barrier film including a biaxially stretched polypropylene substrate, an inorganic oxide vapor deposition film, and a covering layer having barrier properties laminated in this order; and a sealant layer, wherein
the covering layer of the heat-sterilized multilayer body has a composite elastic modulus of 5.0 GPa or more and 9.5 GPa or less and an indentation hardness of 0.9 GPa or more and 1.7 GPa or less measured by a nanoindentation method using a cross section of the covering layer.

Effects of the Invention

The multilayer body of the present invention is excellent in barrier properties even after heat sterilization.

BRIEF DESCRIPTION OF THE DRAWINGS

Fig. 1 is a cross-sectional view illustrating an example of a layered structure of a multilayer body according to the present embodiment;
Fig. 2 is a cross-sectional view illustrating another example of a layered structure of a multilayer body according to the present embodiment;
Fig. 3 is a graph showing composite elastic moduli and indentation hardnesses after retort treatment at 121°C for 30 minutes in Examples; and
Fig. 4 is a graph showing composite elastic moduli and indentation hardnesses after high-retort treatment at 135°C for 30 minutes in Examples.

PREFERRED MODE FOR CARRYING OUT THE INVENTION

Specific embodiments of the present invention will now be described in detail, but the present invention is not limited to the following embodiments in any way and can be implemented with appropriate changes within the scope of the purpose of the present invention. In addition, in the present specification, the notation "X to Y" (X and Y are arbitrary numbers) means "X or more and Y or less".
In the present specification, the phrase "laminated in this order" means that a biaxially stretched polypropylene substrate, an inorganic oxide vapor deposition film, and a covering layer having barrier properties have only to be laminated so as to be arranged in this order and that another layer, such as an anchor coat layer or a primer layer, may be laminated therebetween.

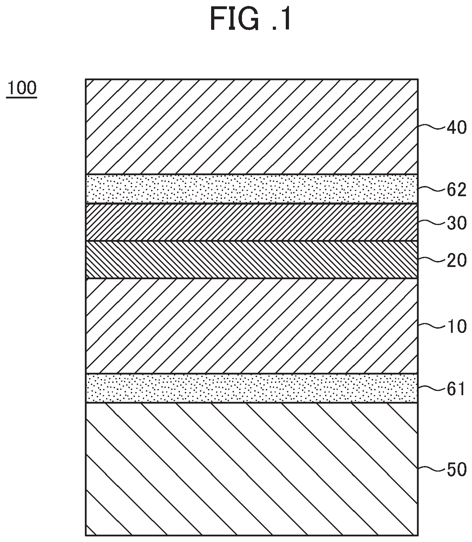

Fig. 1 is a cross-sectional view illustrating an example of a barrier film according to the present embodiment. In a multilayer body 100 of Fig. 1, a barrier film is composed of a first biaxially stretched polypropylene substrate 10, an inorganic oxide vapor deposition film 20, and a covering layer 30 having barrier properties. The inorganic oxide vapor deposition film 20 and the covering layer 30 constitute a barrier layer. The surface of the barrier film on the first biaxially stretched polypropylene substrate 10 side is laminated to a sealant layer 50 with a first adhesive layer 61 therebetween, and the surface of the barrier film on the covering layer 30 side is laminated to a second biaxially stretched polypropylene substrate 40 with an adhesive layer 62 therebetween. That is, the multilayer body 100 is a three-layer structure composed of second biaxially stretched polypropylene substrate 40/second adhesive layer 62/barrier film/first adhesive layer 61/sealant layer 50 with the barrier film as an intermediate layer.

Each layer constituting the multilayer body will be described below.

[First biaxially stretched polypropylene substrate]

The first biaxially stretched polypropylene substrate 10 is a polypropylene substrate subjected to stretching treatment. Hereinafter, a polypropylene substrate simply referred to as a "polypropylene substrate" means a polypropylene substrate subjected to stretching treatment except when referring to stretching treatment.

The biaxially stretched polypropylene substrate is constituted of at least polypropylene. The polypropylene may be any of a propylene homopolymer, a propylene random copolymer, and a propylene block copolymer and may be a mixture of two or more selected therefrom.

The propylene homopolymer is a copolymer made of propylene only. The propylene random copolymer is a random copolymer of propylene and an $\alpha$-olefin or the like other than propylene. The propylene block copolymer is a copolymer including a polymer block consisting of propylene and a polymer block composed at least of an $\alpha$-olefin or the like other than propylene. The latter polymer block may be a polymer block composed of propylene and an $\alpha$-olefin other than propylene.

Examples of the $\alpha$-olefin include $\alpha$-olefins having 2 or more and 20 or less carbon atoms, such as ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

Among polypropylenes, a random copolymer is preferably used from the viewpoint of transparency. When the stiffness and heat resistance of the multilayer body are emphasized, it is preferable to use a homopolymer. When the shock resistance of the multilayer body is emphasized, it is preferable to use a block copolymer.

The melt flow rate (MFR) of a polypropylene may be, in one embodiment, 0.1 g or more per 10 minutes and 50 g or less per 10 minutes, or 0.3 g or more per 10 minutes and 30 g or less per 10 minutes, from the viewpoint of film formation properties and processing suitability. The MFR of a polypropylene is measured in accordance with ASTM D1238 at 230°C with a load of 2.16 kg.

As the polypropylene, a biomass-derived polypropylene or a mechanically or chemically recycled polypropylene may be used.

The content ratio of the polypropylene in the polypropylene substrate is preferably 70 mass% or more, more preferably 80 mass% or more, further preferably 90 mass% or more, and further more preferably 95 mass% or more.

The polypropylene substrate may contain a resin material other than the polypropylene. Examples of the resin material include polyolefin such as polyethylene, a (meth)acrylic resin, a vinyl resin, a cellulose resin, a polyamide, a polyester, and an ionomer resin.

The polypropylene substrate may contain an additive. Examples of the additive include a crosslinking agent, an antioxidant, an antiblocking agent, a lubricant (slip) agent, an UV absorber, a light stabilizer, a filler, a reinforcing agent, a lubricant, an antistatic agent, a pigment, and a modifying resin.

The first biaxially stretched polypropylene substrate is a substrate subjected to biaxial stretching treatment. Consequently, for example, the heat resistance, shock resistance, water resistance, and dimensional stability of the barrier substrate can be improved. The multilayer body including such a barrier substrate is suitable as, for example, a packaging material that is subjected to boiling treatment or retort treatment.

The stretching magnification when performing stretching in the vertical direction (the flow direction of the substrate, MD direction) is preferably 2 times or more and 15 times or less and more preferably 5 times or more and 13 times or less. The stretching magnification when performing stretching in the horizontal direction (the direction perpendicular to the MD direction, TD direction) is preferably 2 times or more and 15 times or less and more preferably 5 times or more and 13 times or less. When the stretching magnification is 2 times or more, the strength and heat resistance of the polypropylene substrate can be more improved, and the printability to the polypropylene substrate can be improved when the first biaxially stretched polypropylene substrate is used as the outer most layer. From the viewpoint of the breaking limit of the polypropylene substrate, the stretching magnification is preferably 15 times or less.

The first biaxially stretched polypropylene substrate may include a first layer and a second layer. The first layer is a layer on one side of the biaxially stretched polypropylene substrate (the side on which a barrier layer such as a vapor deposition film is formed), and the second layer is a layer on the other side of the biaxially stretched polypropylene substrate. The first layer and the second layer may be each a propylene random copolymer which is a random copolymer composed of propylene and an $\alpha$-olefin or the like other than propylene. When the first layer and the second layer are random copolymers, the adhesion with another layer being in contact with the first or second layer can be improved.

The first biaxially stretched polypropylene substrate may include an intermediate layer between the first layer and the second layer. The intermediate layer is made of a polypropylene, e.g., a polypropylene including a propylene homopolymer. The intermediate layer may have a monolayer structure or may have a multilayer structure.

The thickness of the first biaxially stretched polypropylene substrate is preferably 10 μm or more and 100 μm or less, more preferably 10 μm or more and 50 μm or less, and further preferably 15 μm or more and 25 μm or less. When the thickness is equal to or higher than the lower limit, for example, the strength and heat resistance of the barrier substrate can be more improved. When the thickness is equal to or lower than the upper limit, for example, processing suitability of the barrier substrate can be more improved.

The first biaxially stretched polypropylene substrate may be a co-extruded stretched film. The first biaxially stretched polypropylene substrate can be produced by forming a lamination film using a conventionally known method, such as a T-die method or an inflation method, and then stretching the lamination film. Stretching of the lamination film may be performed simultaneously with the film formation by an inflation method.

The first biaxially stretched polypropylene substrate may be surface-treated. Consequently, for example, the adhesion between the polypropylene substrate and another layer can be improved. Examples of the surface treatment include physical treatment such as corona discharge treatment, ozone treatment, low-temperature plasma treatment using one or more gases selected from oxygen gas, argon gas, nitrogen gas, and so on, and glow discharge treatment; and chemical treatment such as oxidation treatment using a chemical reagent. Furthermore, an easy-adhesive layer may be provided on the surface of the first biaxially stretched polypropylene substrate.

When the first biaxially stretched polypropylene substrate is used as the outer most layer of the multilayer body, a printing layer may be provided on the second layer. The image formed on a printing layer is not particularly limited, and examples thereof include a letter, a pattern, a symbol, and a combination thereof. The printing layer formation can also be performed using biomass-derived ink. Consequently, the environmental load can be more reduced.

Examples of the method for forming the printing layer include conventionally known printing methods such as gravure printing, offset printing, and flexographic printing. Among them, from the viewpoint of a reduction in the environmental load, flexographic printing is preferable.

The first biaxially stretched polypropylene substrate may include an anchor coat layer between it and the inorganic oxide vapor deposition film. Consequently, the adhesion strength between the polypropylene substrate and the inorganic oxide vapor deposition film is enhanced, and an inorganic oxide vapor deposition film composed of dense, tightly packed, and highly flexible continuous layers is obtained. In addition, the substrate can have a smoother surface by providing the anchor coat layer on the first layer of the polypropylene substrate. Consequently, it is possible to obtain high gas barrier properties and to suppress breakage of the inorganic oxide vapor deposition film and the covering layer due to deformation or bending of the film and a subsequent decrease in the gas barrier properties. A barrier substrate having heat resistance enough to withstand boiling treatment and retort sterilization treatment and having excellent oil resistance can be obtained by providing the anchor coat layer.

Examples of the material of the anchor coat layer include a polyurethane-based resin, a polyamide-based resin, an epoxy-based resin, a phenolic resin, a (meth)acrylic resin, and a polyvinyl acetate resin. Examples of the polyurethane-based resin include an acrylic urethane resin and a polyester urethane-based resin.

The first biaxially stretched polypropylene substrate may include a surface resin layer on its surface instead of the anchor coat layer.

Specifically, the barrier film may be constituted of the biaxially stretched polypropylene substrate, the surface resin layer, the inorganic oxide vapor deposition film, and the covering layer having barrier properties laminated in this order. Alternatively, the barrier film may be constituted of the biaxially stretched polypropylene substrate, the adhesive resin layer, the surface resin layer, the inorganic oxide vapor deposition film, and the covering layer having barrier properties laminated in this order.

(Surface resin layer)

The surface resin layer includes a resin material having a melting point of 180°C or more (hereinafter, also referred to as high-melting-point resin material). Consequently, a vapor deposition film with high adhesion can be formed on the surface resin layer, and the gas barrier properties can be improved. In addition, a packaging product produced using the multilayer body including the surface resin layer has a high laminate strength. The surface resin layer may be provided on the biaxially stretched polypropylene substrate. That is, the surface resin layer may be adjacent to the biaxially stretched polypropylene substrate. When an adhesive resin layer is disposed between the biaxially stretched polypropylene substrate and the surface resin layer, the adhesive resin layer may be disposed on the biaxially stretched polypropylene substrate, and the surface resin layer may be disposed on the adhesive resin layer. That is, the adhesive resin layer may be adjacent to the biaxially stretched polypropylene substrate, and the surface resin layer may be adjacent to the adhesive resin layer.

The melting point of the high-melting-point resin material is more preferably 185°C or more, further preferably 190°C or more, and particularly preferably 205°C or more. When the melting point of the high-melting-point resin material is 185°C or more, the adhesion of the vapor deposition film can be more improved, and the gas barrier properties can be more improved. In addition, the laminate strength of the packaging product can be more improved. From the viewpoint of the film formation properties of the biaxially stretched polypropylene substrate, the melting point of the high-melting-point resin material is preferably 265°C or less, more preferably 260°C or less, and further preferably 250°C or less. In the present specification, the melting point can be measured in accordance with JIS K7121: 2012 (Testing methods for transition temperatures of plastics). Specifically, the melting point can be determined using a differential scanning calorimetry (DSC) device and measuring a DSC curve at a heating rate of 10°C/min.

The high-melting-point resin material contained in the surface resin layer has a melting point TA, the polypropylene contained in a polypropylene resin layer has a melting point TB, and the difference between the melting point TA and the melting point TB is preferably 20°C or more. The difference between the melting point TA and the melting point TB is preferably 80°C or less and more preferably 60°C or less. When the difference between the melting point TA and the melting point TB is 20°C or more, the adhesion of the vapor deposition film can be more improved, and the gas barrier properties can be more improved. In addition, the laminate strength of the packaging product can be more improved. Alternatively, when the difference between the melting point TA and the melting point TB is 80°C or less, the film formation properties of the biaxially stretched polypropylene substrate can be more improved.

The high-melting-point resin material preferably has a polar group. In the present invention, the polar group indicates a group including one or more hetero atoms. Examples of the polar group include an ester group, an epoxy group, a hydroxy group, an amino group, an amide group, a carboxyl group, a carbonyl group, a carboxylic anhydride group, a sulfone group, a thiol group, and a halogen group. Among these polar groups, a hydroxy group, an ester group, an amino group, an amide group, a carboxyl group, and a carbonyl group are preferable, and an amide group is more preferable, from the viewpoint of the laminate strength of the packaging product.

Any high-melting-point resin material having a melting point of 180°C or more can be used without particular limitation. Examples of the high-melting-point resin material include a vinyl resin, a polyamide, a polyimide, a polyester, a (meth)acrylic resin, a cellulose resin, a polyolefin, and an ionomer resin.

The high-melting-point resin material is particularly preferably a resin material having a melting point of 180°C or more and including a polar group, and a polyester and a polyamide, such as Nylon 6, Nylon 6/6, Nylon MXD6, and Nylon MXD6I (copolymer of metaxylylenediamine, adipic acid, and isophthalic acid), are preferable. As the surface resin layer, amorphous Nylon may be used from the viewpoint of improving the film formation properties. The resin material that is used in the surface resin layer may be a mixture of two or more selected from the high-melting-point resin materials and amorphous Nylon. The use of such a resin material can significantly improve the adhesion of the vapor deposition film to be formed on the surface resin layer, and the gas barrier properties thereof can be effectively improved.

In one embodiment, the high-melting-point resin material is preferably a polyamide. By using a polyamide as the high-melting-point resin material, a decrease in the gas barrier properties can be suppressed even after bending the multilayer body, and the heat resistance of the multilayer body can be improved. In addition, a decrease in the gas barrier properties can be suppressed even after the retort treatment and boiling treatment of the multilayer body described later. The high-melting-point resin material is more preferably Nylon 6, Nylon MXD6, or Nylon MXD6I.

The content of the high-melting-point resin material in the surface resin layer is preferably 20 mass% or more, more preferably 50 mass% or more, and further preferably 80 mass% or more.

The surface resin layer may include a resin material other than the high-melting-point resin material within a range that does not impair the characteristics of the present invention. Within a range that does not impair the characteristics of the present invention, the surface resin layer can include an additive. Examples of the additive include a crosslinking agent, an antioxidant, an antiblocking agent, a lubricant (slip) agent, a UV absorber, a light stabilizer, a filler, a reinforcing agent, an antistatic agent, a pigment, and a modifying resin.

The ratio of the thickness of the surface resin layer to the total thickness of the biaxially stretched polypropylene substrate is preferably 1% or more. The ratio of the thickness of the surface resin layer to the total thickness of the biaxially stretched polypropylene substrate is preferably 10% or less and more preferably 5% or less. When the ratio of the thickness of the surface resin layer to the total thickness of the biaxially stretched polypropylene substrate is 1% or more, the adhesion of the vapor deposition film can be more improved, and the gas barrier properties can be more improved. In addition, the laminate strength of the packaging product can be more improved. When the ratio of the thickness of the surface resin layer to the total thickness of the biaxially stretched polypropylene substrate is 10% or less, the film formation properties and processing suitability of the biaxially stretched polypropylene substrate can be more improved. In addition, the recycling suitability of a packaging product that is produced using a multilayer body with a sealant layer made of a polypropylene can be improved.

The thickness of the surface resin layer is preferably 0.1 $\mu$m or more. The thickness of the surface resin layer is preferably 5 $\mu$m or less and more preferably 4 $\mu$m or less. When the thickness of the surface resin layer is 0.1 $\mu$m or more, the adhesion of the vapor deposition film can be more improved, and the gas barrier properties can be more improved. In addition, the laminate strength of the packaging product can be more improved. In addition, when the thickness of the surface resin layer is 5 μm or less, the film formation properties and processing suitability of the biaxially stretched polypropylene substrate can be more improved. In addition, the recycling suitability of a packaging product that is produced using a multilayer body with a sealant layer made of a polypropylene can be improved.

(Adhesive resin layer)

In one embodiment of the present invention, an adhesive resin layer may be provided between the biaxially stretched polypropylene substrate and the surface resin layer. Consequently, the interlayer adhesion between the biaxially stretched polypropylene substrate and the surface resin layer can be improved.

The adhesive resin layer can be formed from an adhesive resin such as a polyether, a polyester, a silicone resin, an epoxy resin, a polyurethane, a vinyl resin, a phenolic resin, a polyolefin, and an acid-modified polyolefin. Among these substances, from the viewpoint of the recycling suitability, a polyolefin and an acid-modified product are preferable, and a polypropylene and an acid-modified product thereof are particularly preferable. As the adhesive polypropylene, a commercially available product, such as ADMER series, manufactured by Mitsui Chemicals, Inc. can be used.

The thickness of the adhesive resin layer is not particularly limited but can be, for example, 1 μm or more and 15 μm or less. When the thickness of the adhesive resin layer is 1 μm or more, the adhesion between the polypropylene resin layer and the surface resin layer can be more improved. When the thickness of the adhesive resin layer is 15 μm or less, processing suitability of the biaxially stretched polypropylene substrate can be improved.

The biaxially stretched polypropylene substrate composed of the above-described respective layers is subjected to stretching treatment. The mechanical strength is improved by the stretching treatment. The stretching treatment may be uniaxial stretching or may be biaxial stretching.

In one embodiment, the biaxially stretched polypropylene substrate is a coextruded film. The coextruded film can be produced by forming a lamination film by a T-die method, an inflation method, or the like, and then stretching the lamination film. The inflation method can perform film formation and stretching treatment sequentially in one process and is therefore preferable from the viewpoint of productivity.

The stretching magnification of the biaxially stretched polypropylene substrate in the vertical direction (MD direction) and the horizontal direction (TD direction) is preferably 2 times or more and more preferably 5 times or more. The stretching magnification of the biaxially stretched polypropylene substrate in the vertical direction (MD direction) and the horizontal direction (TD direction) is preferably 15 times or less and more preferably 13 times or less. The strength of the biaxially stretched polypropylene substrate can be more improved by adjusting the stretching magnification to 2 times or more. In addition, the printability of the biaxially stretched polypropylene substrate can be improved. In contrast, the stretching magnification is preferably 15 times or less, from the viewpoint of the breaking limit of the biaxially stretched polypropylene substrate. When the polypropylene resin layer of the biaxially stretched polypropylene substrate is provided with heat sealability and is produced into a packaging product by envelope pasting (e.g., a tube), the stretching magnification is more preferably 2 times or more and 10 times or less and particularly preferably 2.5 times or more and 7 times or less.

In one embodiment, the stretching treatment is preferably performed such that the tensile strength of the biaxially stretched polypropylene substrate in the vertical direction (MD direction) is larger than the tensile strength in the horizontal direction (TD direction). In such a configuration, it is possible to impart high tearability in one direction to the packaging product produced from the multilayer body of the present invention. The tensile strength of the biaxially stretched polypropylene substrate in the vertical direction (MD direction) is preferably 1.05 times or more, more preferably 1.10 times or more, and further preferably 1.2 times or more the tensile strength in the horizontal direction (TD direction). The tensile strength in the vertical direction (MD direction) can be, for example, 200 MPa or more and 300 MPa or less. In the present specification, the tensile strength of the biaxially stretched polypropylene substrate is measured in accordance with JIS K7127: 1999. As the measurement instrument, a tension tester STA-1150 manufactured by Orientec Co., Ltd. can be used. As a test piece, the biaxially stretched polypropylene substrate cut into a rectangular film with a width of 15 mm and a length of 150 mm can be used. The distance between a pair of chucks to hold the test piece is 100 mm at the time of starting the measurement, and the tensile speed is 300 mm/min. In the present specification, the environment for measuring the tensile strength is a temperature of 23°C and a relative humidity of 50%, unless specifically specified.

The surface resin layer constituting the biaxially stretched polypropylene substrate may be surface-treated. Consequently, the adhesion with the adjacent layer (vapor deposition film) can be improved. The method for surface treatment is not particularly limited, and examples thereof include physical treatment such as corona discharge treatment, ozone treatment, low-temperature plasma treatment using one or more gases selected from argon gas, oxygen gas, nitrogen gas, and so on, and glow discharge treatment; and chemical treatment such as oxidation treatment using a chemical reagent.

When a surface resin layer is provided, a vapor deposition film of an inorganic oxide is provided on the surface resin layer. That is, the vapor deposition film is adjacent to the surface resin layer. Consequently, the multilayer body can be imparted with gas barrier properties, specifically, an oxygen barrier property and a vapor barrier property. In addition, it is possible to suppress a decrease in the mass of the content filled in a packaging product produced using the multilayer body of the present invention.

The first biaxially stretched polypropylene substrate may include a surface coat layer on its surface instead of the anchor coat layer or the surface resin layer.

(Surface coat layer)

The biaxially stretched polypropylene substrate includes a surface coat layer containing a resin material having a polar group on the polypropylene resin layer. Consequently, a vapor deposition film having high adhesion can be formed on the surface coat layer, and the gas barrier properties can be improved. In addition, as described later, a packaging product that is produced using the multilayer body including the surface coat layer has a high laminate strength. In one embodiment, the surface coat layer may be disposed on the polypropylene resin layer. That is, the surface coat layer may be adjacent to the polypropylene resin layer.

The surface coat layer includes a resin material having a polar group. In the present invention, the polar group indicates a group including one or more hetero atoms. Examples of the polar group include an ester group, an epoxy group, a hydroxy group, an amino group, an amide group, a carboxyl group, a carbonyl group, a carboxylic anhydride group, a sulfone group, a thiol group, and a halogen group. Among these polar groups, a carboxyl group, a carbonyl group, an ester group, a hydroxy group, and an amino group are preferable, and a carboxyl group and a hydroxy group are more preferable, from the viewpoint of the lamination properties of the packaging product.

As the resin material having a polar group, a polyester, a polyethylene imine, a hydroxy group-containing (meth) acrylic resin, a polyamide, such as Nylon 6, Nylon 6/6, Nylon MXD6, and amorphous Nylon, and a polyurethane are preferable. By using such a resin material, the adhesion of the vapor deposition film that is formed on the surface coat layer can be significantly improved, and the gas barrier properties can be effectively improved.

In one embodiment, the resin material having a polar group is preferably a hydroxy group-containing (meth) acrylic resin.

Consequently, the heat resistance of the multilayer body can be improved. In addition, a decrease in the gas barrier properties can be suppressed even after retort treatment and boiling treatment of the multilayer body.

In one embodiment of the present invention, the hydroxy group-containing (meth)acrylic resin that is used for forming the surface coat layer is a polymer of a neutral monomer and a hydroxy group-containing (meth)acrylic monomer. Examples of the neutral monomer include methyl (meth)acrylate, ethyl (meth)acrylate, isopropyl (meth)acrylate, n-butyl (meth)acrylate, 2-ethylhexyl (meth)acrylate, lauryl (meth)acrylate, styrene, vinyltoluene, and vinyl acetate. Examples of the hydroxy group-containing (meth)acrylic monomer include 2-hydroxyethyl (meth)acrylate and hydroxypropyl (meth) acrylate.

The hydroxy group-containing (meth)acrylic resin preferably has a glass transition temperature (Tg) of 50°C or more, more preferably 70°C or more. The hydroxy group-containing (meth)acrylic resin preferably has a glass transition temperature (Tg) of 200°C or less, more preferably 150°C or less. The blocking resistance can be improved by adjusting the glass transition temperature (Tg) of the hydroxy group-containing (meth)acrylic resin to 50°C or more. When an isocyanate compound is used together with the hydroxy group-containing (meth)acrylic resin in formation of the surface coat layer, the reactivity thereof can be improved by adjusting the glass transition temperature (Tg) of the hydroxy group-containing (meth)acrylic resin to 200°C or less. In the present specification, the Tg can be measured in accordance with JIS K7121: 2012 (Testing methods for transition temperatures of plastics). Specifically, the Tg can be determined using a differential scanning calorimetry (DSC) device and measuring a DSC curve at a heating rate of 10°C/min.

The hydroxy group-containing (meth)acrylic resin preferably has a number average molecular weight of 10,000 or more. The hydroxy group-containing (meth)acrylic resin preferably has a number average molecular weight of 100,000 or less. The blocking resistance can be improved by adjusting the number average molecular weight of the hydroxy group-containing (meth)acrylic resin to 10,000 or more. The ease of formation of the surface coat layer can be improved by adjusting the number average molecular weight of the hydroxy group-containing (meth)acrylic resin to 100,000 or more. In the present specification, the number average molecular weight can be measured by gel permeation chromatography (GPC). In GPC measurement, generally, the number average molecular weight of a polymer is measured in terms of standard polystyrene.

The hydroxyl value of the hydroxy group-containing (meth)acrylic resin preferably is 20 mg KOHL/g or more, more preferably 30 mg KOHL/g or more. The hydroxyl value of the hydroxy group-containing (meth)acrylic resin is preferably 200 mg KOHL/g or less and more preferably 150 mg KOHL/g or less. When an isocyanate compound is used together with the hydroxy group-containing (meth)acrylic resin in formation of the surface coat layer, the reactivity thereof can be improved by adjusting the hydroxyl value of the hydroxy group-containing (meth)acrylic resin to 20 mg KOHL/g or more. The amount of the isocyanate compound to be used can be suppressed to decrease the manufacturing cost by adjusting the hydroxyl value of the hydroxy group-containing (meth)acrylic resin to 200 mg KOHL/g or less. In the present specification, the hydroxyl value can be measured in accordance with JIS K0070: 1992 (Test methods for acid value, saponification value, ester value, iodine value, hydroxyl value and unsaponifiable matter of chemical products).

In the present invention, the surface coat layer can be formed using an aqueous emulsion or a solvent-based emulsion. Examples of the aqueous emulsion include a polyamide-based emulsion, a polyethylene-based emulsion, and a polyurethane-based emulsion. Examples of the solvent-based emulsion include a polyester-based emulsion.

The content of the resin material having a polar group in the surface coat layer is preferably 70 mass% or more, more preferably 80 mass% or more, and further preferably 90 mass% or more.

The surface coat layer may include a resin material other than the resin material having a polar group within a range that does not impair the characteristics of the present invention. In one embodiment of the present invention, the surface coat layer may include an isocyanate compound. The surface coat layer can include an additive within a range that does not impair the characteristics of the present invention. Examples of the additive include a crosslinking agent, an antioxidant, an antiblocking agent, a lubricant (slip) agent, a UV absorber, a light stabilizer, a filler, a reinforcing agent, an antistatic agent, a pigment, and a modifying resin.

The ratio of the thickness of the surface coat layer to the total thickness of the biaxially stretched polypropylene substrate is preferably 0.08% or more, more preferably 0.2% or more, further preferably 1% or more, and further more preferably 3% or more. The ratio of the thickness of the surface coat layer to the total thickness of the biaxially stretched polypropylene substrate is preferably 20% or less and more preferably 10% or less. The adhesion of the vapor deposition film can be more improved, and the gas barrier properties can be more improved by adjusting the ratio of the thickness of the surface coat layer to the total thickness of the biaxially stretched polypropylene substrate to 0.08% or more. In addition, the laminate strength of the packaging product can be more improved. The film formation properties and processing suitability of the biaxially stretched polypropylene substrate can be more improved by adjusting the ratio of the thickness of the surface coat layer to the total thickness of the biaxially stretched polypropylene substrate to 20% or less. In addition, the recycling suitability of a packaging product that is produced using the multilayer body of the present invention can be improved.

The thickness of the surface coat layer is preferably 0.02 $\mu$m or more, more preferably 0.05 $\mu$m or more, further preferably 0.1 $\mu$m or more, and further more preferably 0.2 $\mu$m or more. The thickness of the surface coat layer is preferably 10 $\mu$m or less and more preferably 5 $\mu$m or less. When the thickness of the surface coat layer is 0.02 $\mu$m or more, the adhesion of the vapor deposition film can be more improved, and the gas barrier properties can be more improved. In addition, the laminate strength of the packaging product can be more improved. The film formation properties and processing suitability of the biaxially stretched polypropylene substrate can be more improved by adjusting the thickness of the surface coat layer to 10 $\mu$m or less. In addition, the recycling suitability of the packaging product that is produced using the multilayer body of the present invention can be improved.

The biaxially stretched polypropylene substrate can be off-line manufactured, specifically, can be produced by forming a resin composition including a polypropylene into a resin film by a T-die method, an inflation method, or the like, then stretching the resin film, applying a coat-forming coating liquid onto the resin film, and drying it. Alternatively, the biaxially stretched polypropylene substrate can be in-line manufactured, specifically, can be produced by forming a resin composition containing a polypropylene into a resin film by a T-die method, an inflation method, or the like, then stretching the resin film in the vertical direction (MD direction), applying a coat-forming coating liquid onto the resin film, drying it, and then stretching the resin film in the horizontal direction (TD direction). Stretching in the horizontal direction may be performed first. Alternatively, stretching in both directions of the vertical direction and the horizontal direction may be performed before the application of the coat-forming coating liquid or after the application of the coat-forming coating liquid.

The first biaxially stretched polypropylene substrate is preferably transparent. Specifically, it is preferable that the total light transmittance measured based on JIS K 7361-1: 1997 is high. Specifically, the total light transmittance is preferably 70% or more, more preferably 80% or more, and particularly preferably 90% or more.

[Inorganic oxide vapor deposition film]

Then, the inorganic oxide vapor deposition film 20 that is formed on the first layer of the first biaxially stretched polypropylene substrate 10 on the surface side will be described.

The barrier film includes a vapor deposition film made of an inorganic oxide as a gas barrier layer. The vapor deposition film may be provided on the above-described anchor coat layer. Consequently, the gas barrier properties, specifically, an oxygen barrier property and a vapor barrier property can be improved.

Examples of the inorganic oxide include aluminum oxide (alumina), silicon oxide (silica), magnesium oxide, calcium oxide, zirconium oxide, titanium oxide, boron oxide, hafnium oxide, barium oxide, and silicon carbide oxide (carbon-containing silicon oxide). Among these inorganic oxides, silica and alumina are preferable.

The thickness of the vapor deposition film is preferably 1 nm or more and 150 nm or less, more preferably 5 nm or more and 60 nm or less, and further preferably 7 nm or more and 40 nm or less. When the thickness is equal to or higher than the lower limit, for example, the oxygen barrier property and vapor barrier property of the barrier substrate can be more improved. When the thickness is equal to or less than the upper limit, for example, the occurrence of a crack in the vapor deposition film can be suppressed, and the recycling suitability of the packaging material can be improved.

Examples of the method for forming the vapor deposition film include physical vapor deposition method (PVD method) such as vacuum deposition, sputtering, and ion plating; and chemical vapor deposition method (CVD method) such as plasma chemical vapor deposition, thermal chemical vapor deposition, and photochemical vapor deposition.

The vapor deposition film may be a monolayer formed by a single deposition process or a multilayer formed by a plurality of deposition processes. When the vapor deposition film is a multilayer, the respective layers may be composed of the same inorganic oxide or may be composed of different inorganic oxides. The respective layers may be formed by the same method or by different methods.

[Covering layer]

The covering layer 30 that is formed on the inorganic oxide vapor deposition film 20 is an organic covering film (barrier coat layer) that mechanically and chemically protects the inorganic oxide vapor deposition film and improves the barrier performance.

The covering layer is formed by applying a barrier coating agent onto the inorganic oxide vapor deposition film and solidifying it. The barrier coating agent is composed of metal alkoxide and a water-soluble polymer and as needed a silane coupling agent, a sol-gel method catalyst, and an acid.

The metal alkoxide is at least one metal alkoxide represented by a formula $R^1{}_nM(OR^2)_m$ (wherein, $R^1$ and $R^2$ each independently represent an organic group having 1 to 8 carbon atoms, M represents a metal atom, n represents an integer of 0 or more, m represents an integer of 1 or more, and n + m represents the valence of M). Examples of the metal atom represented by M in the metal alkoxide include silicon, zirconium, titanium, and aluminum, and, for example, an alkoxysilane including Si as M can be preferably used.

The alkoxysilane is represented by, for example, a formula $Si(ORa)_4$ (wherein, Ra represents a lower alkyl group). In the above, as Ra, a methyl group, an ethyl group, an n-propyl group, an n-butyl group, and so on can be used. s the alkoxysilane, for example, tetramethoxysilane $Si(OCH_3)_4$, tetraethoxysilane $Si(OC_2H_5)_4$, tetrapropoxysilane $Si(OC_3H_7)_4$, tetrabutoxysilane $Si(OC_4H_9)_4$, and so on can be used. The alkoxides may be used in combination of two or more thereof.

As the silane coupling agent, a silane coupling agent having a reactive group, such as a vinyl group, an epoxy group, a methacrylic group, and an amino group, can be used. In particular, an organoalkoxysilane having an epoxy group is preferable. For example, γ-glycidoxypropyltrimethoxysilane, γ-glycidoxypropylmethyldimethoxysilane, γ-glycidoxypropyldimethylmethoxysilane, γ-glycidoxypropyltriethoxysilane, γ-glycidoxypropylmethyldiethoxysilane, γ-glycidoxypropyldimethylethoxysilane, or β-(3,4-epoxycyclohexyl)ethyltrimethoxysilane can be used. The above silane coupling agents may be used as a mixture of two or more thereof.

In particular, the crosslink density of the cured film of a covering layer with a bifunctional silane coupling agent, such as γ-glycidoxypropylmethyldimethoxysilane and γ-glycidoxypropylmethyldiethoxysilane, is lower than the crosslink density in a system using a trialkoxysilane. Accordingly, since the covering layer becomes a flexible cured film having excellent gas barrier properties and hot water resistance and also having excellent bending resistance, a packaging material including the barrier film is hardly deteriorated in the gas barrier properties even after a gelbo flex test.

As the water-soluble polymer, a polyvinyl alcoholic resin or an ethylene-vinyl alcohol copolymer can be used alone, or a combination of a polyvinyl alcoholic resin and an ethylene-vinyl alcohol copolymer can be used. In the covering layer according to the present embodiment, a polyvinyl alcoholic resin is suitable.

As the polyvinyl alcoholic resin, generally, one obtained by saponification of polyvinyl acetate can be used. The polyvinyl alcoholic resin may be a partially saponified polyvinyl alcoholic resin with several tens percent of residual acetate groups, a completely saponified polyvinyl alcohol without a residual acetate group, or a modified polyvinyl alcoholic resin with a modified OH group. Regarding the saponification degree, it is at least necessary to use a polyvinyl alcoholic resin subjected to crystallization that improves the film hardness of the gas barrier coat film, preferably, to a saponification degree of 70% or more. In addition, also regarding the polymerization degree, any polyvinyl alcoholic resin having a polymerization degree within a range that is used in a conventional sol-gel method (about from 100 to 5,000) can be used. Examples of such a polyvinyl alcoholic resin include an RS resin "RS-110 (saponification degree: 99%, polymerization degree: 1,000)" manufactured by Kuraray Co., Ltd. and "GOHSENOL NM-14 (saponification degree: 99%, polymerization degree: 1,400)" manufactured by The Nippon Synthetic Chemical Industry Co., Ltd.

As the ethylene-vinyl alcohol copolymer, a saponification product of a copolymer of ethylene and vinyl acetate, i.e., a product obtained by saponifying an ethylene-vinyl acetate random copolymer can be used. For example, the ethylene-vinyl alcohol copolymer includes partially saponified products with from several tens to several molar percent of residual acetate groups and completely saponified products without a residual acetate group and is not particularly limited. However, the lower limit of the saponification degree is preferably 80% or more, more preferably 90% or more, and further preferably 95% or more from the viewpoint of barrier properties. The upper limit is 100% or less.

As the sol-gel method catalyst, acids or amine-based compounds are suitable.

As the acid, for example, a mineral acid such as sulfuric acid, hydrochloric acid, and nitric acid, and an organic acid, such as acetic acid and tartaric acid, can be used.

The content of the acid is preferably 0.001 to 0.05 mol%, more preferably 0.01 to 0.03 mol%, to the total molar amount of the alkoxy group in the metal alkoxide. If the content is less than 0.001 mol%, the catalytic effect is too low, and if the content is higher than 0.05 mol%, the catalytic effect is too strong, and the reaction rate is too fast and tends to be uneven.

As the amine-based compound, a tertiary amine that is substantially insoluble in water and soluble in an organic solvent is suitable. Specifically, for example, N,N-dimethylbenzylamine, tripropylamine, tributylamine, and tripentylamine can be used. In particular, N,N-dimethylbenzylamine is suitable.

The content of the amine-based compound is, for example, 0.01 to 1.0 parts by mass, in particular, preferably 0.03 to 0.3 parts by mass based on 100 parts by mass of the metal alkoxide. If the content is less than 0.01 parts by mass, the catalytic effect is too low, and if the content is higher than 1.0 parts by mass, the catalytic effect is too strong, and the reaction rate is too fast and tends to be uneven.

As the solvent, water and alcohols such as methyl alcohol, ethyl alcohol, n-propyl alcohol, isopropanol, and n-butanol can be used.

The thus-formed covering layer 3 with barrier properties has a layer thickness of 100 to 500 nm, preferably 200 to 400 nm. This range is preferable because the coat film is not broken and sufficiently covers the surface of the vapor deposition film.

When the composition of the barrier coating agent contains a silane coupling agent, the water-soluble polymer such as a polyvinyl alcoholic resin can be included in a range of 5 to 10 parts by mass, based on 100 parts by mass of the alkoxysilane, and the silane coupling agent can be included in a range of 1 to 10 parts by mass. Consequently, the flexibility of the film can be maintained. In the above, the use of the silane coupling agent in an amount exceeding 20 parts by mass increases the stiffness and brittleness of the formed barrier coat film and is not preferable.

When the silane coupling agent is not contained, the barrier properties can be enhanced by reducing the quantity ratio of the metal alkoxide by adjusting the amount of the water-soluble polymer such as a polyvinyl alcoholic resin to 10 to 20 parts by mass based on 100 parts by mass of the alkoxysilane.

In the covering layer, the lower limit of the ratio of the mass of the metal alkoxide such as tetraethoxysilane in terms of $SiO_2$ to the mass of the water-soluble resin such as polyvinyl alcohol is preferably 1.6 or more and more preferably 1.9 or more. The upper limit is preferably 3.9 or less and more preferably 3.5 or less. A ratio exceeding 3.9 is not preferable because the barrier properties may decrease after a post-process or a gelbo flex test, and a ratio less than 1.6 is not preferable because the barrier properties after retort treatment decrease.

Instead of the above-described configuration of a metal alkoxide and a water-soluble polymer, the covering layer may be formed by application of a resin composition including one or more resins (gas barrier resins) selected from the group consisting of a urethane resin, an acrylic resin, a polyvinylidene chloride resin, a polyvinyl alcoholic resin (PVA), an ethylene-viny alcohol copolymer resin (EVOH), polyacrylonitrile, and a polyamide resin such as Nylon 6, Nylon 6/6, and polymethaxylylene adipamide (MXD6) and solidification thereof. The covering layer may further include a silane coupling agent and silica microparticles, as needed.

The covering layer containing a urethane resin can have adequate elasticity or flexibility, reduce the influence on the vapor deposition film by the pressing force at the time of printing or lamination, and suppress the deterioration in the gas barrier properties. As the urethane resin, any of conventionally known polyester urethane resin and polyether urethane resin can be used. As such a urethane resin, a reaction product of a polyol, such as polyester polyol and polyether polyol, and a polyisocyanate can be used.

Examples of the polyester polyol include a polyester polyol that is obtained by reaction between a low-molecular-weight polyol and a polycarboxylic acid; a polyester polyol that is obtained by ring-opening polymerization of a cyclic ester compound such as ε-caprolactone; and a polyester polyol that is obtained by copolymerization thereof. These polyester polyols may be used alone or in combination of two or more thereof.

Examples of the low-molecular-weight polyol include aliphatic polyols having a molecular weight of about 50 to 300, such as ethylene glycol, propylene glycol, 1,4-butanediol, 1,6-hexanediol, diethylene glycol, neopentyl glycol, and 1,3-butanediol; polyols having an alicyclic structure, such as cyclohexanedimethanol; and polyols having an aromatic structure, such as bisphenol A and bisphenol F. Examples of the polycarboxylic acid that can be used in manufacturing of the polyester polyol include aliphatic polycarboxylic acids such as succinic acid, adipic acid, sebacic acid, and dodecanedicarboxylic acid; aromatic polycarboxylic acids such as terephthalic acid, isophthalic acid, phthalic acid, and naphthalenedicarobxylic acid; and anhydrides and esters thereof. In addition, it is also possible to use, as the polyester polyol, a polyester polyurethane polyol having a urethane bond in its molecular structure that is obtained by modifying the polyisocyanate of the above-mentioned polyester polyol.

These polyester polyols may be used alone or in combination of two or more thereof.

Examples of the polyether polyol include those obtained by addition polymerization of an alkylene oxide using one or more compounds having two or more active hydrogen atoms as an initiator. Examples of the compound having two or more active hydrogen atoms include propylene glycol, trimethylene glycol, 1,3-butanediol, 1,4-butanediol, 1,6-hexanediol, neopentyl glycol, glycerin, diglycerin, trimethylolethane, trimethylolpropane, water, and hexanetriol. Examples of the alkylene oxide include propylene oxide, butylene oxide, styrene oxide, epichlorohydrin, and tetrahydrofuran. In addition, it is also possible to use, as the polyether polyol, a polyether polyurethane polyol having a urethane bond in its molecular structure that is obtained by modifying the above-mentioned polyether polyol with polyisocyanate. These polyether polyols may be used alone or in combination of two or more thereof.

Examples of the polyisocyanate include polyisocyanates having an alicyclic structure such as cyclohexane diisocyanate, dicyclohexylmethane diisocyanate, and isophorone diisocyanate; aromatic polyisocyanates such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, tolylene diisocyanate, and naphthalene diisocyanate; and aliphatic polyisocyanates such as hexamethylene diisocyanate, lysine diisocyanate, xylylene diisocyanate, and tetramethylxylylene diisocyanate. Among these polyisocyanates, 4,4'-diphenylmethane diisocyanate, 2,4'-diphenylmethane diisocyanate, carbodiimide-modified diphenylmethane diisocyanate, and crude diphenylmethane diisocyanate are preferable. These polyisocyanates may be used alone or in combination of two or more thereof.

The covering layer containing a polyvinyl alcoholic resin can have good oxygen barrier property and vapor barrier property and can effectively prevent the occurrence of a crack in the vapor deposition film.

As the silane coupling agent, a conventionally known silane coupling agent can be used. For example, the same materials as those included in the above-described gas barrier resin composition are suitably used. The primer layer containing a silane coupling agent can improve the interlayer adhesion with the barrier coat layer.

As the silica microparticles, a conventionally known silica can be used. In particular, when the urethane resin is a polyether polyurethane, the primer layer containing silica microparticles can suppress blocking at the time of winding in the process of manufacturing a gas barrier vapor deposition film.

The content of the gas barrier resin in the covering layer is preferably 50 mass% or more and more preferably 75 mass% or more. The oxygen barrier property and the vapor barrier property can be more improved by adjusting the content of the gas barrier resin in the covering layer to 50 mass% or more. The content of the gas barrier resin in the covering layer is preferably 95 mass% or less and more preferably 90 mass% or less.

The thickness of the covering layer is preferably 0.01 $\mu$m or more and more preferably 0.1 $\mu$m or more. The thickness of the covering layer is preferably 10 $\mu$m or less and more preferably 5 $\mu$m or less. The oxygen barrier property and vapor barrier property of the multilayer body can be more improved by adjusting the thickness of the covering layer to 0.01 $\mu$m or more. In contrast, processing suitability of the multilayer body can be improved by adjusting the thickness of the covering layer to 10 $\mu$m or less. In addition, as long as the covering layer has a thickness within the above range, even if the material is not a polypropylene, the recycling suitability is not deteriorated.

The covering layer can be formed by dissolving or dispersing the gas barrier resin in water or an appropriate solvent and applying and drying it. Alternatively, the covering layer can be formed by applying and drying a commercially available coating agent.

[Adhesive layer]

The surface of the barrier film on the first biaxially stretched polypropylene substrate 10 side is laminated to the sealant layer 50 with the first adhesive layer 61 therebetween, and the surface of the barrier film on the covering layer 30 side is laminated to the second biaxially stretched polypropylene substrate 40 with the adhesive layer 62 therebetween. Consequently, the adhesion between the barrier film and the sealant layer and the adhesion between the first biaxially stretched polypropylene substrate and the second substrate can be improved, and a decrease in the barrier properties due to heat sterilization such as retort or boiling sterilization can be suppressed.

The first adhesive layer 61 and the second adhesive layer 62 may be each made of any of a one-component curing adhesive, a two-component curing adhesive, or a non-curing type adhesive. The adhesive may be a solvent-free adhesive or may be a solvent-based adhesive suitable for dry lamination.

Examples of the solvent-free adhesive, i.e., non-solvent lamination adhesive include a polyether-based adhesive, a polyester-based adhesive, a silicone-based adhesive, an epoxy-based adhesive, and a urethane-based adhesive. Among these adhesives, a urethane-based adhesive is preferable, and a urethane-based two-component curing adhesive is more preferable.

Examples of the solvent-based adhesive include a rubber-based adhesive, a vinyl-based adhesive, an olefin-based adhesive, a silicone-based adhesive, an epoxy-based adhesive, a phenol-based adhesive, and a urethane-based adhesive. Among these adhesives, a urethane-based adhesive is preferable, and a urethane-based two-component curing adhesive is more preferable.

The thickness of the adhesive layer is, for example, 0.1 $\mu$m or more and 10 $\mu$m or less, preferably 0.2 $\mu$m or more and 8 $\mu$m or less, and further preferably 0.5 $\mu$m or more and 6 $\mu$m or less.

[Second biaxially stretched polypropylene substrate]

The second biaxially stretched polypropylene substrate 40 is laminated to the surface of the barrier film on the covering layer 30 side with the second adhesive layer 62 therebetween. Here, since the same material as that of the first biaxially stretched polypropylene substrate 10 can be used as the second biaxially stretched polypropylene substrate, the explanation thereof is omitted.

When the multilayer body has a three-layer structure as shown in Fig. 1, a printing layer (not shown) may be formed on the surface of the outer most layer of the second biaxially stretched polypropylene substrate 40 or may be formed on the surface of the second biaxially stretched polypropylene substrate 40 on the second adhesive layer 62 side.

[Sealant layer]

The sealant layer 50 contains a resin material that can be fused together by heat. Examples of the resin material that can be fused together by heat include polyolefins, specifically, polyethylene, such as low-density polyethylene, linear low-density polyethylene, and medium-density polyethylene, polypropylene, polybutene, a methylpentene polymer, and a cyclic olefin copolymer.

The sealant layer is preferably composed of polypropylene. Consequently, since the films constituting the three-layer structure are all made of polypropylene, it is possible to monomaterialize the packaging material. After collection of a used packaging material, the substrate and the sealant layer are not required to be separated, and the recycling suitability of the packaging material can be improved. The sealant layer made of polypropylene can also have improved oil resistance and can withstand heat sterilization.

The content ratio of the polypropylene in the sealant layer is preferably 70 mass% or more, more preferably 80 mass% or more, further preferably 90 mass% or more, and further more preferably 95 mass% or more. Consequently, for example, the recycling suitability of the packaging material can be improved.

When the sealant layer is made of a polypropylene, the content ratio of the polypropylene to the total amount of the resin materials contained in the multilayer body is preferably 80 mass% or more, more preferably 85 mass% or more, further preferably 88 mass% or more, and particularly preferably 90 mass% or more. Consequently, for example, a packaging material monomaterialized by using the multilayer body can be produced, and the recycling suitability of the packaging material can be improved.

Examples of the polypropylene include a propylene homopolymer, a propylene random copolymer, such as a propylene-$\alpha$-olefin random copolymer, and a propylene block copolymer, such as a propylene-$\alpha$-olefin block copolymer. The detail of the $\alpha$-olefin is as described above. From the viewpoint of heat sealability, the density of the polypropylene is, for example, 0.88 g/cm$^3$ or more and 0.92 g/cm$^3$ or less. The density is measured in accordance with JIS K7112, in particular, D method (density gradient tube method, 23°C). From the viewpoint of a reduction in the environmental load, a biomass-derived polypropylene and/or a recycled polypropylene may be used.

The sealant layer may contain an additive. Examples of the additive include a crosslinking agent, an antioxidant, an antiblocking agent, a lubricant (slip) agent, a UV absorber, a light stabilizer, a filler, a reinforcing agent, a lubricant, an antistatic agent, a pigment, and a modifying resin. For example, the sealant layer may contain an antistatic agent. Consequently, the occurrence of static electricity on the surface of the multilayer body can be suppressed, and, for example, adhesion between the multilayer bodies can be suppressed.

The sealant layer may have a monolayer structure or may have a multilayer structure. The thickness of the sealant layer is preferably 10 μm or more and 200 μm or less and more preferably 20 μm or more and 150 μm or less. When the thickness is equal to or higher than the lower limit, for example, the lamination strength of a packaging material including the multilayer body can be more improved. When the thickness is equal to or lower than the upper limit, for example, processing suitability of the multilayer body can be more improved. When a pouch (in particular, retort pouch) is produced from the multilayer body, the thickness of the sealant layer is further preferably 30 μm or more and 100 μm or less.

The sealant layer is preferably an unstretched resin film and more preferably an unstretched polypropylene film, from the viewpoint of heat sealability. The resin film can be produced by, for example, a cast method, a T-die method, or an inflation method. The sealant layer may be laminated through an adhesive layer as in the present embodiment, or the sealant layer may be formed by melt-extruding a resin material that can be fused together by heat on the barrier film.

[Other lamination example]

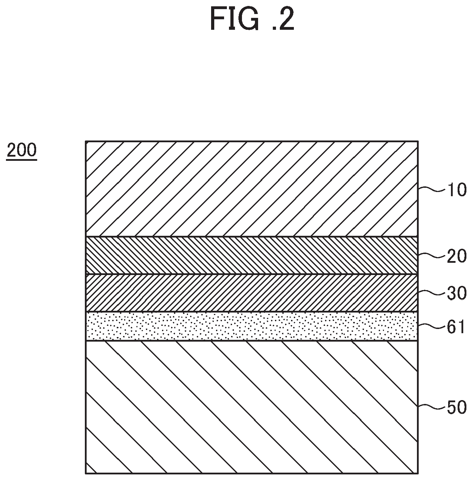

Fig. 2 shows an example in which the covering layer 30 of the barrier film is produced on the sealant layer 50 with the first adhesive layer 61 therebetween. Thus, in the present invention, the structure of the multilayer body is not limited to a three-layer structure and may be a two-layer structure.

[Packaging product]

The multilayer body can be used as a packaging product, such as a packaging bag for containing a content such as a food, by being formed into a bag shape with the sealant layer on the inside. The multilayer body of the present invention is a heat-sterilized multilayer body that is used in a packaging bag containing a retorted food or a boiled food.

The heat sterilization is a meaning including not only retort treatment but also boiling treatment. The boiling treatment means heat sterilization, for example, at 60°C to 100°C for 10 to 60 minutes.

The retort treatment means heat and pressure sterilization at 100°C to 140°C. The heat and pressure sterilization is preferably that the F value, which is a concept representing the integral value of the amount of heat load, is 4 or more, more specifically, sterilization at 121°C for 3 minutes or more or at 120°C for 4 minutes stipulated in the Food Sanitation Act. Further specifically, sterilization at 120°C for 30 to 60 minutes is most common, but the sterilization may be semi-retort at 105°C to 115°C for 30 to 60 minutes or high-retort (HTST) at 130°C to 140°C for 30 to 60 minutes.

[Composite elastic modulus and indentation hardness of covering layer]

In the present invention, the composite elastic modulus and indentation hardness after lamination and the above-described heat sterilization are the composite elastic modulus and indentation hardness that are measured using a cross-section of the covering layer of the multilayer body by a nanoindentation method, and the composite elastic modulus is 5.0 GPa or more and 9.5 GPa or less, and the indentation hardness is 0.9 GPa or more and 1.7 GPa or less. Within this range, a decrease in the barrier properties can be suppressed not only after the boiling treatment but also after the retort treatment of the multilayer body. Preferably, the composite elastic modulus is 5.5 GPa or more and 9.5 GPa or less, and the indentation hardness is 0.9 GPa or more and less than 1.5 GPa. Alternatively, the composite elastic modulus is 7.1 GPa or more and 8.2 GPa or less, and the indentation hardness is 1.5 GPa or more and 1.7 GPa or less. Consequently, the oxygen transmission rate of the packaging material after heat sterilization described later at 23°C and 90% RH in accordance with JIS K 7126-2 can be adjusted to 1.0 cc/m$^2$/day/atm or less after retort treatment.

It is further preferable that the composite elastic modulus is 6.0 GPa or more and 9.0 GPa or less and that the indentation hardness is 1.0 GPa or more and 1.5 GPa or less (or the indentation hardness is 1.0 GPa or more and less than 1.5 GPa), and a decrease in the barrier properties can be suppressed even after high-retort treatment of the multilayer body.

The indentation hardness of the covering layer is calculated by the following equation (1). Furthermore, the composite elastic modulus of the covering layer is calculated by the following equation (2).

$$\text{Indentation hardness} = Pmax/A \cdots (1)$$

[Math 1]

$$\text{Composite elastic modulus} = \frac{S\sqrt{\pi}}{2\sqrt{A}} \qquad \cdots (2)$$

Here,

Pmax: maximum load (unit: $\mu$N);
A: projected contact area at maximum depth (unit: $\mu$m$^2$); and
S: contact stiffness.

In measurement of the composite elastic modulus and indentation hardness of the covering layer in a barrier film alone, a multilayer body after dry lamination and before heat sterilization, and a multilayer body after dry lamination and heat sterilization, each sample is embedded in an epoxy resin or the like and is treated with a microtome to expose a cross-section of the covering layer as pretreatment.

Consequently, the composite elastic modulus and indentation hardness can be measured using the "cross-section" of the covering layer of a multilayer body by a nanoindentation method. This method can measure the composite elastic modulus and indentation hardness of a covering layer without peeling the multilayer body to expose the covering layer. The cross-section is produced by cutting a sample in the thickness direction perpendicular to the main surface of the film. The production of a cross-section was implemented by producing a block of a film embedded in an embedding resin and cutting the block using a commercially available rotary microtome under an environment of room temperature (23°C). Finishing was implemented with a diamond knife.

In the measurement of the indentation hardness and composite elastic modulus of a cross-section of the covering layer by a nanoindentation method, an indenter is put on the cross-section of the covering layer and is pressed into the covering layer from the cross-section up to a load of 15 $\mu$N over 10 seconds, and the state is held for 5 seconds. The position at which the indenter is pressed in the cross-section where the covering layer is exposed is around the center in the thickness direction of the covering layer. Subsequently, the load is removed over 10 seconds. Consequently, a maximum load Pmax, a projected contact area at maximum depth A, and a load-displacement curve are obtained. The measurement is performed under an environment of a relative humidity of 50% and 23°C unless specifically specified. The measurement is implemented at 5 or more positions in a single cross-section, and the indentation hardness and composite elastic modulus are each described as the arithmetic mean of the values measured with good reproducibility at 5 positions. More detailed conditions for the measurement are described in Examples.

When the multilayer body is heat-sterilized, the covering layer is required to have hardness above a certain level for suppressing the disruption of the vapor deposition layer by thermal contraction of an OPP substrate at the time of heat sterilization. At the same time, the OPP substrate is stretched by the tension at the time of lamination processing of the packaging material, which also causes a decrease in the barrier properties by the disruption of the vapor deposition layer. This decrease in the barrier properties can be suppressed by imparting an adequate flexibility to the covering layer.

The present inventors found, regarding a covering layer constituting a mono-material packaging material that is a multilayer body of polypropylene films, the ranges of elastic modulus and indentation hardness that are suitable for heat sterilization processes such as retort treatment and found a multilayer body that can suppress a decrease in the barrier properties even "after heat sterilization" "after lamination".

Consequently, the packaging material after heat sterilization has successfully achieved an oxygen transmission rate of 10.0 cc/m$^2$/day/atm or less, preferably 5.0 cc/m$^2$/day/atm or less in accordance with JIS K 7126-2 at 23°C and 90% RH.

The composite elastic modulus and indentation hardness of a covering layer can be adjusted by, for example, the composition of the covering layer and drying temperature at the time of forming the covering layer.

EXAMPLES

The present invention will now be described in more detail by Examples, but is not restricted by these descriptions in any way.

(Example 1)

A biaxially stretched polypropylene film having a thickness of 20 $\mu$m (a first surface layer that is a layer consisting of a copolymer of propylene, ethylene, and butene and having a thickness of 1.0 $\mu$m on the vapor deposited surface side, a second surface layer that is a layer consisting of a copolymer of propylene, ethylene, and butene and having a thickness of 1.0 $\mu$m on the non-vapor deposited surface side, and an intermediate layer that is a layer consisting of a polypropylene homopolymer and having a thickness of 18.0 $\mu$m) was used as a first biaxially stretched polypropylene substrate 10, and an anchor coat layer with a thickness of 200 nm was formed from a mixture liquid of a hydroxy group-containing (meth) acrylic resin and tolylene diisocyanate on one surface of the first biaxially stretched polypropylene substrate 10, and an inorganic oxide vapor deposition film 20 having a thickness of 10 nm was formed from aluminum oxide on the anchor coat layer by a PVD vapor deposition.

In a covering layer of Example 1, a polyvinyl alcohol having a saponification degree of 99% or more and a polymerization degree of 2,400 as a water-soluble polymer was mixed with a liquid of water and isopropyl alcohol at a ratio of 95/5 such that the solid content was 4% to obtain a solution A.

Water, isopropyl alcohol, and 1 N hydrochloric acid were mixed at a ratio of 65/34/1 to obtain a solution B.

Tetraethoxysilane as a metal alkoxide was provided as a solution C.

The solution B and the solution C were mixed at a certain ratio to obtain a liquid as a solution D, and the solution A and the solution D were mixed at a certain ratio to obtain a liquid as a barrier coating agent.

The barrier coating agent was prepared by adjusting the mixing ratio of the solution B and the solution C and the mixing ratio of the solution A and the solution D such that the solid content after mixing was 7% and the mass of tetraethoxysilane in terms of SiO$_2$ to the solid content of PVA was 2.25.

The inorganic oxide vapor deposition film 20 was coated with the above-prepared barrier coating agent by a direct gravure method.

Subsequently, drying was performed at 100°C for 30 seconds to form a covering layer with a dry film thickness of 300 nm, followed by aging at 40°C for 7 days to produce a barrier film.

Then, the surface of the barrier film on the covering layer 30 side and a second biaxially stretched polypropylene film 40 (thickness: 20 $\mu$m) were laminated to each other with a second adhesive layer 62 therebetween using a polyurethane-based two-component curable solvent-based adhesive 1 by a dry lamination method. Furthermore, the surface of the barrier film on the opposite side to the covering layer 30 and a sealant layer (non-stretched polypropylene

film: 60 μm) were laminated to each other with a first adhesive layer 61 therebetween using a two-component curable solvent-based adhesive by a dry lamination method to produce a multilayer body of Example 1.

(Example 2)

A multilayer body of Example 2 was produced as in Example 1 except that the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 2.4 and mixing them.

(Example 3)

A multilayer body of Example 3 was produced as in Example 1 except that glycidoxypropyltrimethoxysilane was added in an amount of 5% of the weight of tetraethoxysilane when mixing the solution B and the solution C, and then the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 2.5 and mixing them.

(Example 4)

A multilayer body of Example 4 was produced as in Example 1 except that the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 2.75 and mixing them.

(Example 5)

A multilayer body of Example 5 was produced as in Example 1 except that the inorganic oxide vapor deposition film 20 with 30 nm was formed from silica by a CVD method, glycidoxypropyltrimethoxysilane was added in an amount of 5% of the weight of tetraethoxysilane when mixing the solution B and the solution C, and the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 3.0 and mixing them.

(Example 6)

A multilayer body of Example 6 was produced as in Example 5 except that glycidoxypropyltrimethoxysilane was added in an amount of 5% of the weight of tetraethoxysilane when mixing the solution B and the solution C, and then the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 3.5 and mixing them.

(Example 7)

A multilayer body of Example 7 was produced as in Example 6 except that the surface of the barrier film on the covering layer 30 side and the second biaxially stretched polypropylene film 40 (thickness: 20 μm) were laminated to each other with the second adhesive layer 62 therebetween using a polyester polyurethane-based two-component curable solvent-based adhesive 2 by a dry lamination method.

(Example 8)

A multilayer body of Example 8 was produced as in Example 6 except that the surface of the barrier film on the covering layer 30 side and the second biaxially stretched polypropylene film 40 (thickness: 20 μm) were laminated to each other with the second adhesive layer 62 therebetween using a solvent-free adhesive 3 composed of a polyester-based polymer and a mixture of HDI and XDI as a curing agent by a dry lamination method.

(Example 9)

A multilayer body of Example 9 was produced as in Example 6 except that the surface of the barrier film on the covering layer 30 side and the second biaxially stretched polypropylene film 40 (thickness: 20 μm) were laminated to each other with the second adhesive layer 62 therebetween using a solvent-free adhesive 4 composed of a polyester-based polymer and a mixture of IPDI and HDI as a curing agent by a dry lamination method.

(Example 10)

A multilayer body of Example 10 was produced as in Example 1 except that the temperature for drying the covering layer was 120°C.

(Example 11)

A multilayer body of Example 11 was produced as in Example 6 except that the temperature for drying the covering layer was 120°C.

(Example 12)

A multilayer body of Example 12 was produced as in Example 6 except that the temperature for drying the covering layer was 110°C.

(Example 19)

A multilayer body of Example 19 was produced as in Example 5 except that the barrier coating agent was prepared by adjusting the mixing ratio of the solution B and the solution C and the mixing ratio of the solution A and the solution D such that the mass of tetraethoxysilane in terms of $SiO_2$ to the solid content of PVA was 2.5 and mixing them, and the aging after drying was performed at 55°C for 1 day.

(Example 20)

A multilayer body of Example 20 was produced as in Example 19 except that the barrier coating agent was prepared by adjusting the mixing ratio of the solution B and the solution C and the mixing ratio of the solution A and the solution D such that the mass of tetraethoxysilane in terms of $SiO_2$ to the solid content of PVA was 2.25 and mixing them, and the aging after drying was performed at 55°C for 3 days.

(Example 21)

A multilayer body of Example 21 was produced as in Example 19 except that the aging after drying was performed at 55°C for 3 days.

(Example 22)

A multilayer body of Example 22 was produced as in Example 6 except that as the first biaxially stretched polypropylene substrate 10, a biaxially stretched polypropylene film having a thickness of 20 μm (a first surface layer that is a layer consisting of a copolymer of propylene and ethylene and having a thickness of 0.7 μm on the vapor deposited surface side, a second surface layer that is a layer consisting of a copolymer of propylene and ethylene and having a thickness of 0.7 μm on the non-vapor deposited surface side, and an intermediate layer that is a layer consisting of a polypropylene homopolymer and having a thickness of 18.6 μm) was used.

(Example 23)

A multilayer body of Example 23 was produced as in Example 6 except that as the first biaxially stretched polypropylene substrate 10, a biaxially stretched polypropylene film having a thickness of 20 μm (a first surface layer that is a polyamide layer consisting of a mixture of 50 mass% of a copolymer of m-xylylenediamine and adipic acid and 50 mass% of a copolymer of dicarboxylic acid consisting of isophthalic acid/terephthalic acid in a molar ratio of 2/1 and hexamethylene diamine and having a thickness of 0.7 μm on the vapor deposited surface side, a second surface layer that is a layer consisting of a copolymer of propylene, ethylene, and butene and having a thickness of 0.7 μm on the non-vapor deposited surface side, and an intermediate layer that is a layer consisting of a polypropylene homopolymer and having a thickness of 18.6 $\mu$m) was used.

(Comparative Example 1)

A multilayer body of Comparative Example 1 was produced as in Example 1 except that glycidoxypropyltrimethoxysilane was added in an amount of 5% of the weight of tetraethoxysilane when mixing the solution B and the solution C, and the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 1.5 and mixing them.

(Comparative Example 2)

A multilayer body of Comparative Example 2 was produced as in Comparative Example 1 except that the temperature for drying the covering layer was 120°C.

(Comparative Example 3)

A multilayer body of Comparative Example 3 was produced as in Example 5 except that glycidoxypropyltrimethoxysilane was added in an amount of 5% of the weight of tetraethoxysilane when mixing the solution B and the solution C, and the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 4.0 and mixing them.

(Comparative Example 4)

A multilayer body of Comparative Example 4 was produced as in Comparative Example 3 except that 1,3,5-tris(3-trialkoxysilylpropyl) isocyanurate was added in an amount of 15% of the weight of tetraethoxysilane when mixing the solution B and the solution C, and the barrier coating agent for the covering layer was prepared by adjusting the mixing ratio of the solution B and the solution C and the mixing ratio of the solution A and the solution D such that the solid content was 7% and the mass of tetraethoxysilane in terms of $SiO_2$ to the solid content of PVA was 4.0 and mixing them.

(Comparative Example 9)

A multilayer body of Comparative Example 9 was produced as in Example 6 except that the covering layer was formed by spin coating, the covering layer was dried at 80°C for 60 seconds, and aging was not performed.

(Comparative Example 10)

A multilayer body of Comparative Example 10 was produced as in Example 6 except that aging after the drying of the covering layer was not performed.

(Comparative Example 11)

A multilayer body of Comparative Example 11 was produced as in Example 6 except that aging after the drying of the covering layer was performed at 55°C for 7 days.

(Example 13)

In Example 13, a multilayer body that was the same as the multilayer body of Example 1 was subjected to high-retort treatment at 135°C for 30 minutes.

(Example 14)

In Example 14, a multilayer body that was the same as the multilayer body of Example 4 was subjected to high-retort treatment at 135°C for 30 minutes.

(Example 15)

In Example 15, a multilayer body that was the same as the multilayer body of Example 7 was subjected to high-retort treatment at 135°C for 30 minutes.

(Example 16)

In Example 16, a multilayer body that was the same as the multilayer body of Example 8 was subjected to high-retort treatment at 135°C for 30 minutes.

(Example 17)

In Example 17, a multilayer body that was the same as the multilayer body of Example 9 was subjected to high-retort treatment at 135°C for 30 minutes.

(Example 18)

In Example 18, a multilayer body that was the same as the multilayer body of Example 10 was subjected to high-retort treatment at 135°C for 30 minutes.

(Comparative Example 5)

In Comparative Example 5, a multilayer body that was the same as the multilayer body of Comparative Example 1 was subjected to high-retort treatment at 135°C for 30 minutes.

(Comparative Example 6)

In Comparative Example 6, a multilayer body that was the same as the multilayer body of Comparative Example 3 was subjected to high-retort treatment at 135°C for 30 minutes.

(Comparative Example 7)

A barrier film was manufactured as in Example 1 except that the covering layer was dried at 60°C, but since wrinkles occurred at the winding unit when forming the covering layer due to the low drying temperature, the multilayer body was not manufactured.

(Comparative Example 8)

A barrier film was manufactured as in Example 1 except that the covering layer was dried at 80°C, but since wrinkles occurred at the winding unit when forming the covering layer due to the low drying temperature, the multilayer body was not manufactured.

[Table 1]

|  | Vapor deposition system-Inorganic oxide | Drying temperature of covering layer |
|---|---|---|
| Example 1 | PVD-$AlO_X$ | 100°C |
| Example 2 | PVD-$AlO_X$ | 100°C |
| Example 3 | PVD-$AlO_X$ | 100°C |
| Example 4 | PVD-$AlO_X$ | 100°C |
| Example 5 | CVD-$SiO_X$ | 100°C |
| Example 6 | CVD-$SiO_X$ | 100°C |
| Example 7 | CVD-$SiO_X$ | 100°C |
| Example 8 | CVD-$SiO_X$ | 100°C |
| Example 9 | CVD-$SiO_X$ | 100°C |

(continued)

|  | Vapor deposition system-Inorganic oxide | Drying temperature of covering layer |
|---|---|---|
| Example 10 | PVD-AlO$_X$ | 120°C |
| Example 11 | CVD-SiO$_X$ | 120°C |
| Example 12 | CVD-SiO$_X$ | 110°C |
| Example 19 | CVD-SiO$_X$ | 100°C |
| Example 20 | CVD-SiO$_X$ | 100°C |
| Example 21 | CVD-SiO$_X$ | 100°C |
| Example 22 | CVD-SiO$_X$ | 100°C |
| Example 23 | CVD-SiO$_X$ | 100°C |
| Comparative Example 1 | PVD-AlO$_X$ | 100°C |
| Comparative Example 2 | PVD-AlO$_X$ | 120°C |
| Comparative Example 3 | CVD-SiO$_X$ | 100°C |
| Comparative Example 4 | CVD-SiO$_X$ | 100°C |
| Comparative Example 9 | CVD-SiO$_X$ | 80°C |
| Comparative Example 10 | CVD-SiO$_X$ | 100°C |
| Comparative Example 11 | CVD-SiO$_X$ | 100°C |
| Example 13 | PVD-AlO$_X$ | 100°C |
| Example 14 | PVD-AlO$_X$ | 100°C |
| Example 15 | CVD-SiO$_X$ | 100°C |
| Example 16 | CVD-SiO$_X$ | 100°C |
| Example 17 | CVD-SiO$_X$ | 100°C |
| Example 18 | PVD-AlO$_X$ | 100°C |
| Comparative Example 5 | PVD-AlO$_X$ | 100°C |
| Comparative Example 6 | CVD-SiO$_X$ | 100°C |
| Comparative Example 7 | PVD-AlO$_X$ | 60°C |
| Comparative Example 8 | PVD-AlO$_X$ | 80°C |

<Measurement of composite elastic modulus and indentation hardness of covering layer>

The multilayer bodies of Examples and Comparative Examples were heat-sterilized by retort treatment at 121°C for 30 minutes in Examples 1 to 12 and 19 to 21 and Comparative Examples 1 to 4 and 9 to 11 and by high-retort treatment at 135°C for 30 minutes in Examples 13 to 18 and Comparative Examples 5 and 6.

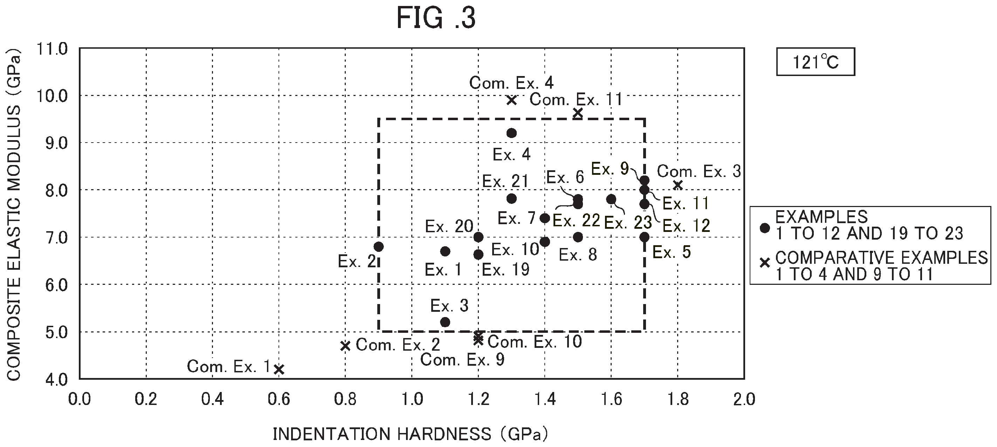

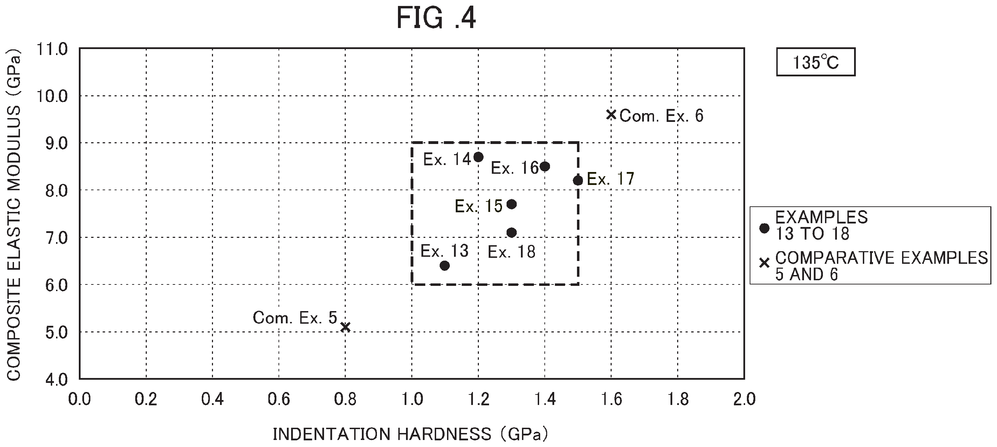

The composite elastic modulus (GPa) and indentation hardness (GPa) of the covering layer in a multilayer body after heat sterilization were measured under the following conditions. The results are shown in Table 3 and Figs. 3 and 4. "Ex. 1" and "Com. Ex. 1" in Figs. 3 and 4 mean "Example 1" and "Comparative Example 1", respectively.

Measurement apparatus: TI-950 TriboIndenter, manufactured by HYSITRON,
Measurement position: from cross-section side of covering layer,
Measurement mode: indentation,
Indenter: cubecorner indenter, TI-0037,
Measurement profile:

0 → 10 sec: 0 → 15 μN;
10 → 15 sec: 15 μN; and
15 → 25 sec: 15 → 0 μN, and

Number of data points: 200 points/sec.

<Measurement of composite elastic modulus and indentation hardness before and after lamination and before and after heat sterilization>

Regarding Examples 1 and 6, the composite elastic modulus (GPa) and indentation hardness (GPa) of the covering layer in the barrier film alone, the multilayer body after dry lamination and before retort treatment, and the multilayer body after dry lamination and retort treatment at 121°C for 30 minutes were measured under the conditions above. The measurement was performed from the cross-sectional side of each covering layer. The results are shown in Table 2. It is understood from Table 2 that the values change irregularly in the barrier film alone, the multilayer body before retort treatment, and the multilayer body after retort treatment. The reason for the change in value is unclear, but it is inferred that the change depends on the combination of the composition of the covering layer, the drying condition, and the heat sterilization condition.

[Table 2]

|  | Barrier film alone | | Multilayer body before retort treatment | | Multilayer body after retort treatment | |
| --- | --- | --- | --- | --- | --- | --- |
|  | Indentation hardness (GPa) | Composite elastic modulus (GPa) | Indentation hardness (GPa) | Composite elastic modulus (GPa) | Indentation hardness (GPa) | Composite elastic modulus (GPa) |
| Example 1 | 1.2 | 9.0 | 1.1 | 5.8 | 1.1 | 6.7 |
| Example 6 | 1.3 | 11.1 | 1.3 | 8.6 | 1.5 | 7.8 |

<Measurement of oxygen permeability>

The oxygen permeability (cc/m$^2$/day/atm, expressed as "OTR" in the table) in the multilayer body after heat sterilization in each of Examples and Comparative Examples was measured with an oxygen transmission rate-measuring apparatus (manufactured by MOCON, Inc., product name: "OX-TRAN 2/20") under measurement conditions of 23°C and 90% RH in accordance with JIS K 7126-2. The results are shown in Table 3.

[Table 3]

|  | Heat sterilization condition | After heat sterilization | | After heat sterilization |
| --- | --- | --- | --- | --- |
|  |  | Indentation hardness | Composite elastic | OTR (cc/m$^2$· day·atm) |
| Example 1 | 121°C30min | 1.1 | 6.7 | 0.7 |
| Example 2 | 121°C30min | 0.9 | 6.8 | 0.5 |
| Example 3 | 121°C30min | 1.1 | 5.2 | 1.8 |
| Example 4 | 121°C30min | 1.3 | 9.2 | 0.4 |
| Example 5 | 121°C30min | 1.7 | 7.0 | 1.9 |
| Example 6 | 121°C30min | 1.5 | 7.8 | 0.8 |
| Example 7 | 121°C30min | 1.4 | 7.4 | 0.5 |
| Example 8 | 121°C30min | 1.5 | 7.0 | 1.5 |
| Example 9 | 121°C30min | 1.7 | 8.2 | 1.3 |
| Example 10 | 121°C30min | 1.4 | 6.9 | 0.6 |
| Example 11 | 121°C30min | 1.7 | 8.0 | 0.4 |
| Example 12 | 121°C30min | 1.7 | 7.7 | 0.6 |
| Example 19 | 121°C30min | 1.2 | 6.7 | 0.6 |
| Example 20 | 121°C30min | 1.2 | 7.0 | 0.7 |

(continued)

| | Heat sterilization condition | After heat sterilization | | After heat sterilization |
| --- | --- | --- | --- | --- |
| | | Indentation hardness | Composite elastic | OTR (cc/m$^2$· day·atm) |
| Example 21 | 121°C30min | 1.3 | 7.8 | 0.6 |
| Example 22 | 121°C30min | 1.5 | 7.7 | 0.8 |
| Example 23 | 121°C30min | 1.6 | 7.8 | 0.4 |
| Comparative Example 1 | 121°C30min | 0.6 | 4.2 | fail(50 cc or more) |
| Comparative Example 2 | 121°C30min | 0.8 | 4.7 | 30.0 |
| Comparative Example 3 | 121°C30min | 1.8 | 8.1 | 3.9 |
| Comparative Example 4 | 121°C30min | 1.3 | 9.9 | - |
| Comparative Example 9 | 121°C30min | 1.2 | 4.8 | 1.2 |
| Comparative Example 10 | 121°C30min | 1.2 | 4.9 | 1.3 |
| Comparative Example 11 | 121°C30min | 1.5 | 9.7 | 21.3 |
| Example 13 | 135°C30min | 1.1 | 6.4 | 1.9 |
| Example 14 | 135°C30min | 1.2 | 8.7 | 2.4 |
| Example 15 | 135°C30min | 1.3 | 7.7 | 1.0 |
| Example 16 | 135°C30min | 1.4 | 8.5 | 2.4 |
| Example 17 | 135°C30min | 1.5 | 8.2 | 2.1 |
| Example 18 | 135°C30min | 1.3 | 7.1 | 1.7 |
| Comparative Example 5 | 135°C30min | 0.8 | 5.1 | fail(50 cc or more) |
| Comparative Example 6 | 135°C30min | 1.6 | 9.6 | 24.2 |
| Comparative Example 7 | 135°C30min | - | - | - |
| Comparative Example 8 | 135°C30min | - | - | - |

The multilayer bodies of Comparative Examples 7 and 8 were unsuitable from the viewpoint of processing suitability because wrinkles occurred at the winding unit when forming the covering layer due to the low drying temperature, and were not subjected to the subsequent evaluation.

It is understood from Table 3 and Figs. 3 and 4 that a multilayer body having a composite elastic modulus of 5.0 GPa or more and 9.5 GPa or less and an indentation hardness of 0.9 GPa or more and 1.7 GPa or less has an excellent oxygen barrier property after retort treatment at 121°C for 30 minutes.

The barrier properties of the barrier film included in each of the multilayer bodies of Examples 1 to 18 were measured before and after stretched by 2% with a tension tester. As a result, the deterioration in the barrier property after the stretching ((OTR after stretching) - (OTR before stretching)) was 3 cc/m$^2$/day/atm or less, and it was confirmed that a decrease in the barrier properties by stretching was suppressed.

EXPLANATION OF REFERENCE NUMERALS

10         (first) biaxially stretched polypropylene substrate
20         inorganic oxide vapor deposition film
30         covering layer
40         second biaxially stretched polypropylene substrate
50         sealant layer
61         first adhesive layer
62         second adhesive layer
100, 200    multilayer body

**Claims**

1. A heat-sterilized multilayer body for use in a packaging bag adapted for containing a retorted food or a boiled food, the multilayer body comprising:

   a barrier film including a biaxially stretched polypropylene substrate, an inorganic oxide vapor deposition film, and a covering layer having barrier properties laminated in this order; and
   a sealant layer, wherein
   the covering layer of the heat-sterilized multilayer body has a composite elastic modulus of 5.0 GPa or more and 9.5 GPa or less and an indentation hardness of 0.9 GPa or more and 1.7 GPa or less measured by a nanoindentation method using a cross section of the covering layer.

2. The heat-sterilized multilayer body according to claim 1, wherein the composite elastic modulus is 6.0 GPa or more and 9.0 GPa or less, and the indentation hardness is 1.0 GPa or more and 1.5 GPa or less.

3. The heat-sterilized multilayer body according to claim 1 or 2, wherein the heat sterilization is retort treatment.

4. The heat-sterilized multilayer body according to claim 1 or 2, wherein the covering layer includes a cured product of a resin composition including an alkoxysilane and a hydroxy group-containing water-soluble resin.

5. The heat-sterilized multilayer body according to claim 1 or 2, wherein a surface of the covering layer of the barrier film is laminated to another film with an adhesive layer therebetween.

6. A packaging material of the heat-sterilized multilayer body according to claim 1 or 2, the packaging material having an oxygen transmission rate of 10.0 cc/m$^2$/day/atm or less measured in accordance with JIS K 7126-2 at 23°C and 90% RH.

7. A packaging material of the heat-sterilized multilayer body according to claim 1 or 2, the packaging material having an oxygen transmission rate of 5.0 cc/m$^2$/day/atm or less measured in accordance with JIS K 7126-2 at 23°C and 90% RH.

8. A packaging product comprising the heat-sterilized multilayer body according to claim 1 or 2.

9. Use of a heat-sterilized multilayer body for packaging a retorted food or a boiled food,

   the heat-sterilized multilayer body comprising: a barrier film including a biaxially stretched polypropylene substrate, an inorganic oxide vapor deposition film, and a covering layer having barrier properties laminated in this order; and a sealant layer, wherein
   the covering layer of the heat-sterilized multilayer body has a composite elastic modulus of 5.0 GPa or more and 9.5 GPa or less and an indentation hardness of 0.9 GPa or more and 1.7 GPa or less measured by a nanoindentation method using a cross section of the covering layer.

# FIG .1

100

40
62
30
20
10
61
50

# FIG .2

200

10

20

30

61

50

FIG .3

FIG .4

## INTERNATIONAL SEARCH REPORT

| | International application No. |
|---|---|
| | **PCT/JP2024/030075** |

**A. CLASSIFICATION OF SUBJECT MATTER**

*B32B 27/00*(2006.01)i; *B32B 9/00*(2006.01)i; *B32B 27/32*(2006.01)i; *B65D 65/40*(2006.01)i
FI:  B32B27/00; B32B9/00 A; B32B27/32 102; B65D65/40 D

According to International Patent Classification (IPC) or to both national classification and IPC

**B. FIELDS SEARCHED**

Minimum documentation searched (classification system followed by classification symbols)

B32B27/00; B32B9/00; B32B27/32; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/145393 A1 (TOPPAN PRINTING CO., LTD.) 03 August 2023 (2023-08-03) claims, paragraphs [0053]-[0054], [0079]-[0127], examples 5, 7, table 1, fig. 1-3 | 1-9 |
| A | WO 2022/085586 A1 (TOPPAN PRINTING CO., LTD.) 28 April 2022 (2022-04-28) | 1-9 |
| A | JP 2020-200392 A (TOPPAN PRINTING CO., LTD.) 17 December 2020 (2020-12-17) | 1-9 |
| A | JP 2023-63171 A (DAI NIPPON PRINTING CO., LTD.) 09 May 2023 (2023-05-09) | 1-9 |
| A | JP 2023-77283 A (DAI NIPPON PRINTING CO., LTD.) 05 June 2023 (2023-06-05) | 1-9 |
| A | JP 2023-79681 A (TOPPAN PRINTING CO., LTD.) 08 June 2023 (2023-06-08) | 1-9 |
| A | JP 7296507 B1 (TOPPAN PRINTING CO., LTD.) 22 June 2023 (2023-06-22) | 1-9 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/030075**

| Patent document cited in search report | | | Publication date (day/month/year) | Patent family member(s) | | | Publication date (day/month/year) |
|---|---|---|---|---|---|---|---|
| WO | 2023/145393 | A1 | 03 August 2023 | (Family: none) | | | |
| WO | 2022/085586 | A1 | 28 April 2022 | US | 2023/0257172 | A1 | |
| | | | | EP | 4234235 | A1 | |
| | | | | CN | 116323210 | A | |
| JP | 2020-200392 | A | 17 December 2020 | (Family: none) | | | |
| JP | 2023-63171 | A | 09 May 2023 | (Family: none) | | | |
| JP | 2023-77283 | A | 05 June 2023 | (Family: none) | | | |
| JP | 2023-79681 | A | 08 June 2023 | (Family: none) | | | |
| JP | 7296507 | B1 | 22 June 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022085586 A